# EUROPEAN PATENT APPLICATION

(11) **EP 4 764 012 A1**
(43) Date of publication of application: **24.06.2026**
(21) Application number: 24888631.9
(22) Date of filing: 31.10.2024
(51) Int. Cl.: C22B 3/26, C22B 3/06, C22B 3/08, C22B 3/10, C22B 3/20, C22B 3/44, C22B 7/00, C22B 21/00, C22B 23/00, C22B 26/20, C22B 47/00, C25B 1/34, C25B 9/00, H01M 10/54

(54) **METHOD FOR RECOVERING VALUABLE METALS**

(30) Priority: 08.11.2023 JP 2023190621
(71) Applicant: Asaka Riken Co., Ltd., Koriyama-shi, Fukushima 963-0725 (JP)
(72) Inventor: YAN Yinnan, Koriyama-shi, Fukushima 963-0725 (JP); SHIMOMURA Ryotaro, Koriyama-shi, Fukushima 963-0725 (JP)
(74) Representative: Schön, Christoph
(86) International application number: PCT/JP2024/038885
(87) International publication number: WO 2025/100334

(57) **Abstract**

Provided is a method for recovering cobalt, nickel, manganese, and lithium from a waste lithium ion battery by a wet process with an extremely high recovery rate. The method for recovering valuable metals includes a first solvent extraction step of adding an organic solvent to a solution containing lithium and at least one valuable metal selected from the group consisting of transition metals except for manganese, cobalt, and nickel, magnesium, strontium, and aluminum to extract the valuable metal, wherein the organic solvent includes at least one selected from the group consisting of a compound represented by the following formula (1), phosphonate esters, phosphate esters, phosphinic acid, methyl isobutyl ketone, and trioctylamine, and wherein, in the formula (1), R₁ and R₂ each independently represent a hydrocarbon group having 6 to 20 carbon atoms.

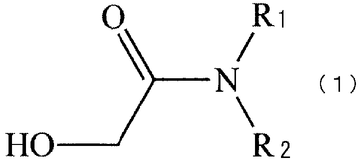

## Description

### Technical Field

The present invention relates to a method for recovering valuable metals.

### Background Art

In recent years, a method for recovering valuable metals such as cobalt, nickel, manganese, and lithium from waste lithium ion batteries, and for reusing the valuable metals as materials for the lithium ion batteries has been investigated with spread of the lithium ion batteries.

In a conventional method for recovering the valuable metals from the waste lithium ion batteries, the waste lithium ion batteries are subjected to a heating treatment (roasting) or not subjected to a heating treatment, and from powder containing the valuable metals obtained by crushing, classifying, etc., cobalt, nickel, manganese, and lithium are separated and purified by a wet process (see Patent Literature 1, for example).

In the present invention, the waste lithium ion battery means a used lithium ion battery of which a lifetime as a battery product ends, a lithium ion battery disposed as a defective product, etc. in a manufacturing step, and a remaining positive electrode material and negative electrode material used for production in the manufacturing step, etc. Powder that contains a positive electrode and a negative electrode and that is obtained from the waste lithium ion battery is referred to as active material powder. Further, an impurity means metals not required to be recovered among metals contained in the active material powder.

### Citation List

### Patent Literature

Patent Literature 1: Japanese Patent No. 7060899

### Summary of Invention

### Technical Problem

In manufacturing the lithium ion battery, adding appropriate amounts of a transition metal except for manganese, cobalt, and nickel, magnesium, strontium, etc. into a positive electrode material is attempted in order to improve battery performance, and elements according to the purpose are selected with a meticulous blending ratio. If the element group of the transition metal, magnesium, strontium, etc. are mixed in the lithium ion battery, separation and purification of manganese, cobalt, and nickel are adversely affected. Specifically in a wet process using solvent extraction, the element group accumulates in the organic solvent, and inhibits extraction of valuable metals such as manganese, cobalt, nickel, etc., which are the original recovery target. As a result, there is inconvenience of decrease in a recovery rate of the valuable metals.

In recent years, there has been a demand for further improvement in the recovery rate in the separation and purification of cobalt, nickel, manganese, and lithium from general waste lithium ion batteries including the waste lithium ion battery with the mixed element group by a wet process in spite of the above inconvenience.

Accordingly, the problem to be solved by the present invention is to provide a method for recovering cobalt, nickel, manganese, and lithium from the waste lithium ion battery by the wet process with an extremely high recovery rate.

### Solution to Problem

As a result of investigations in view of the above problem, the present inventors have found that addition of a specific organic solvent to a solution containing lithium and at least one valuable metal selected from the group consisting of transition metals except for manganese, cobalt, and nickel, magnesium, strontium, and aluminum enables separation of the valuable metal and lithium. The present invention has been completed based on these findings.

The present invention relates to a method for recovering valuable metals, comprising a first solvent extraction step of adding an organic solvent to a solution containing lithium and at least one valuable metal selected from the group consisting of transition metals except for manganese, cobalt, and nickel, alkaline earth metals, and aluminum to extract the valuable metal, wherein the organic solvent comprises at least one selected from the group consisting of a compound represented by the following formula (1), phosphonate esters, phosphate esters, phosphinic acid, methyl isobutyl ketone, and trioctylamine, and wherein, in the formula (1), R₁ and R₂ each independently represent a hydrocarbon group having 6 to 20 carbon atoms.

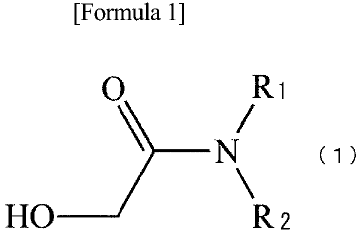

The method for recovering valuable metals preferably further comprises: a dissolution step of dissolving an active material powder obtained by pretreating a waste lithium ion battery into a mineral acid, thereby obtaining a dissolved solution; a neutralization step of neutralizing the dissolved solution with an alkali; a second solvent extraction step of separating, from a residual liquid in the first solvent extraction step, at least one selected from the group consisting of manganese, cobalt, and nickel by organic solvent extraction to obtain a first lithium salt aqueous solution as a residual liquid of the solvent extraction; and a membrane electrolysis step of subjecting the first lithium salt aqueous solution to membrane electrolysis by using an ion exchange membrane to obtain a lithium hydroxide aqueous solution, an acid, and a second lithium salt aqueous solution that is more dilute than the first lithium salt aqueous solution, wherein the lithium hydroxide aqueous solution obtained in the membrane electrolysis step is reused in at least one selected from the group consisting of the neutralization step, the first solvent extraction step, and the second solvent extraction step, and the acid obtained in the membrane electrolysis step is reused as the mineral acid used in the dissolution step.

The mineral acid preferably comprises at least one selected from the group consisting of hydrochloric acid, sulfuric acid, and nitric acid, and more preferably comprises hydrochloric acid.

The alkali used in the neutralization step preferably comprises lithium hydroxide.

A concentration of at least one selected from the group consisting of the compound represented by the following formula (1), the phosphonate ester, the phosphate ester, the phosphinic acid, the methyl isobutyl ketone, and the trioctylamine in the organic solvent is preferably within a range of 0.001 M to 1.5 M.

Electric power used in the membrane electrolysis step preferably comprises electric power obtained by renewable energy, and more preferably comprises electric power obtained by at least one selected from the group consisting of solar power generation, wind power generation, geothermal power generation, hydroelectric power generation, and biomass power generation.

### Advantageous Effect of Invention

The method for recovering valuable metals of the present invention provides a method for recovering cobalt, nickel, manganese, and lithium from the waste lithium ion battery by the wet process with an extremely high recovery rate.

### Brief Description of Drawings

[FIG. 1] FIG. 1 is an explanatory view showing a configuration of one embodiment of the method for recovering valuable metals of the present invention.
[FIG. 2] FIG. 2 is an explanatory sectional view illustrating structure of an ionexchange membrane electrolytic bath used for the method for recovering valuable metals of the present invention.

### Description of Embodiments

The present invention will be described in more detail.

Note that "to" concerning a numerical value range means "or more and or less" and includes numerical values of both ends unless otherwise specified. When a numerical value range is described, the upper limit value and the lower limit value may be appropriately combined, and a numerical value range obtained thereby shall be also disclosed.

In description of the drawings, the same signs are assigned to the same elements, and overlapped description is omitted. A size ratio in the drawings is exaggerated for convenience of description, and may be different from the actual ratio.

The method for recovering valuable metals of the present invention includes a first solvent extraction step of adding an organic solvent to a solution containing lithium and at least one valuable metal selected from the group consisting of (1) transition metals except for manganese, cobalt, and nickel, (2) alkaline earth metals, and (3) aluminum to extract the valuable metal, namely at least one valuable metal selected from the group consisting of the valuable metals (1) to (3). The (2) alkaline earth metal recovered by the method for recovering valuable metals of the present invention preferably includes at least one selected from the group consisting of beryllium, magnesium, calcium, strontium, and barium, more preferably includes at least one selected from the group consisting of magnesium, calcium, and strontium, and is further preferably magnesium, calcium, or strontium.

The organic solvent includes at least one selected from the group consisting of a compound represented by the following formula (1), phosphonate esters, phosphate esters, phosphinic acid, methyl isobutyl ketone, and trioctylamine. The organic solvent is preferably at least one selected from the group consisting of these compounds.

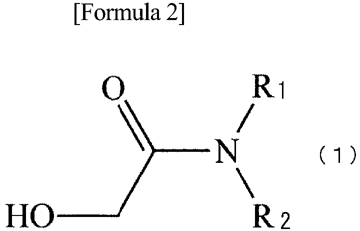

In the formula (1), R₁ and R₂ each independently represent a hydrocarbon group having 6 to 20 carbon atoms. The hydrocarbon group is not particularly limited, and preferably an alkyl group, a cycloalkyl group, an alkenyl group, an alkynyl group, an aryl group, a heteroaryl group (an aromatic heterocyclic group), or an aliphatic heterocyclic group.

The alkyl group is preferably an alkyl group having 6 to 15 carbon atoms, and more preferably an alkyl group having 10 to 15 carbon atoms. It is further preferable that R₁ and R₂ represent dodecyl groups.

The alkenyl group is preferably an alkenyl group having 6 to 15 carbon atoms, and more preferably an alkenyl group having 10 to 15 carbon atoms.

The alkynyl group is preferably an alkynyl group having 6 to 15 carbon atoms, and more preferably an alkynyl group having 10 to 15 carbon atoms.

The aryl group is preferably an aryl group having 6 to 18 carbon atoms, and more preferably an aryl group having 6 to 10 carbon atoms. Examples of the aryl group include a phenyl group.

When the aromatic heteroring is a condensed ring, the aromatic heterocyclic group encompasses a group composed of a condensed heteroring in which a monocyclic aromatic heteroring and another ring, for example, an aromatic hydrocarbon ring, an aliphatic hydrocarbon ring, or a heteroring are condensed, in addition to a group composed of only a monocyclic aromatic heteroring. It is sufficient that a number of ring-constituting heteroatoms to constitute the aromatic heteroring is one or more, and the heteroatom is preferably a nitrogen atom, an oxygen atom, or a sulfur atom. As for a ring-constituting number of the aromatic heteroring, a three- to eight-membered ring are preferable, and a five-membered ring or a six-membered ring is more preferable. Examples of the five-membered aromatic heteroring and a condensed heteroring having the five-membered aromatic heteroring include each cyclic group of a pyrrole ring, an imidazole ring, a pyrazole ring, an oxazole ring, a thiazole ring, a triazole ring, a furan ring, a thiophene ring, a benzimidazole ring, a benzoxazole ring, a benzothiazole ring, an indoline ring, and an indazole ring. Examples of the six-membered aromatic heteroring and a condensed heteroring having the six-membered aromatic heteroring include each cyclic group of a pyridine ring, a pyrimidine ring, a pyrazine ring, a triazine ring, a quinoline ring, and a quinazoline ring.

The aliphatic heterocyclic group encompasses a monocyclic group composed only an aliphatic heteroring and a group composed of an aliphatic condensed heteroring in which an aliphatic heteroring and another ring (for example, an aliphatic ring) are condensed. It is sufficient that a number of ring-constituting heteroatoms to constitute the aliphatic heteroring is one or more, and the heteroatom is preferably a nitrogen atom, an oxygen atom, or a sulfur atom. As for a ring-constituting number of the aliphatic heteroring, a three- to eight-membered ring are preferable, and a five-membered ring or a six-membered ring is more preferable. Preferable specific examples of the aliphatic heteroring include a pyrrolidine ring, an oxolane ring, a thiolane ring, a piperidine ring, a tetrahydrofuran ring, an oxane ring (a tetrahydropyran ring), a thiane ring, a piperazine ring, a morpholine ring, a quinuclidine ring, a pyrrolidine ring, an azetidine ring, an oxetane ring, an aziridine ring, a dioxane ring, a pentamethylene sulfide ring, and γ-butyrolactone.

Examples of the hydrocarbon group also include:
an alkoxy group,
an aryloxy group,
a heteroring-oxy group (a group in which an -O- group is bonded to the heterocyclic group),
an alkoxycarbonyl group,
an aryloxycarbonyl group,
an amino group (having 6 to 20 carbon atoms),
a sulfamoyl group,
an acyl group (including an alkylcarbonyl group, an alkenylcarbonyl group, an alkynylcarbonyl group, an arylcarbonyl group, and a heteroring-carbonyl group, such as an acyl group having 6 to 20 carbon atoms, for example, octanoyl, hexadecanoyl, benzoyl, naphthoyl, nicotinoyl, etc.),
an acyloxy group (including an alkylcarbonyloxy group, an alkenylcarbonyloxy group, an alkynylcarbonyloxy group, an arylcarbonyloxy group, and a heteroring-carbonyloxy group, such as an acyloxy group having 6 to 20 carbon atoms, for example, octanoyloxy, hexadecanoyloxy, benzoyloxy, naphthoyloxy, nicotinoyloxy, etc.),
an aryloyloxy group,
a carbamoyl group,
an acylamino group (an acylamino group having 6 to 20 carbon atoms, for example, benzoylamino, etc.),
an alkylthio group (an alkylthio group having 6 to 20 or less carbon atoms, for example, benzylthio, etc.),
an arylthio group (an arylthio group having 6 to 20 carbon atoms, for example, phenylthio, 1-naphthylthio, 3-methylphenylthio, 4-methoxyphenylthio, etc.),
a heteroring-thio group (a group in which a -S- group is bonded to the heterocyclic group),
an alkylsulfonyl group (an alkylsulfonyl group having 6 to 20 carbon atoms),
an arylsulfonyl group (an arylsulfonyl group having 6 to 20 carbon atoms, for example, benzenesulfonyl, etc.),
an alkylsilyl group (an alkylsilyl group having 6 to 20 carbon atoms, for example, triethylsilyl, etc.),
an arylsilyl group (an arylsilyl group having 6 to 20 carbon atoms, for example, triphenylsilyl, etc.),
a phosphoryl group (a phosphate group having 6 to 20 carbon atoms, for example, -OP(=O)(R^{P})₂),
a phosphonyl group (a phosphonyl group having 6 to 20 carbon atoms, for example, -P(=O)(R^{P})₂), and
a phosphinyl group (a phosphinyl group having 6 to 20 or less carbon atoms, for example, -P(R^{P})₂).
R^{P} represents a hydrogen atom or a substituent (preferably a group selected from the above substituent).
Each of the groups described in these substituents may be further substituted with the above substituent.

Specific examples of the compound represented by the formula (1) include N,N-didodecyl-2-hydroxyacetamide.

Examples of commercial products of the phosphonate ester include PC-88A, manufactured by DAIHACHI CHEMICAL INDUSTRY CO., LTD.

Examples of the phosphate ester include tributyl phosphate (TBP) and di(2-ethylhexyl) phosphate (D2EHPA).

Examples of commercial products of the phosphinic acid include CYANEX272, manufactured by Solvay S.A.

A concentration of at least one selected from the group consisting of the compound represented by the following formula (1), the phosphonate ester, the phosphate ester, the phosphinic acid, the methyl isobutyl ketone, and the trioctylamine in the organic solvent is preferably within a range of 0.001 M to 1.5 M, and more preferably within a range of 0.005 M to 1 M. When the concentration is within the above range, the valuable metals extracted with the organic solvent in the first solvent extraction step are more stably back-extracted from the organic solvent, and the organic solvent is repeatedly used.

The method for recovering valuable metals of the present invention will be described in further detail with reference to the attached drawings.

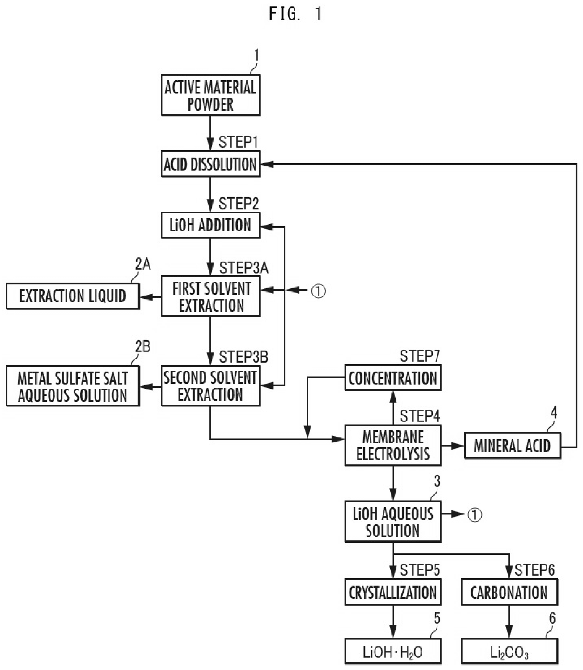

As shown in FIG. 1, the method for recovering valuable metals of the present invention may use an active material powder 1 as a starting material.

Then, the active material powder 1 is dissolved in a mineral acid in STEP 1 to obtain an acid-dissolved solution of the active material powder 1 that contains at least lithium. The mineral acid preferably includes at least one acid selected from the group consisting of hydrochloric acid, sulfuric acid, and nitric acid, more preferably includes hydrochloric acid, and is further preferably hydrochloric acid. The active material powder 1 contains valuable metals such as iron, transition metals, magnesium, strontium, and aluminum, in addition to the lithium.

In the method for recovering valuable metals of the present invention, an alkali is then added to the acid-dissolved solution in STEP 2 to neutralize the mineral acid. The alkali may be added as at least one form selected from the group consisting of an aqueous solution and a solid state. The alkali preferably includes at least one selected from the group consisting of an alkali metal hydroxide and ammonia. The alkali metal constituting the alkali metal hydroxide preferably includes at least one selected from the group consisting of lithium, sodium, potassium, rubidium, cesium, and francium, more preferably includes lithium, sodium, and potassium, is further preferably lithium, sodium, or potassium, and is particularly preferably lithium.

The acid-dissolved solution after the neutralization is then subjected to the first solvent extraction step in STEP 3A. The extraction residual liquid in the first solvent extraction step contains the valuable metals such as lithium, manganese, cobalt, and nickel. An extraction liquid 2A in the first solvent extraction step contains at least one valuable metal selected from the group consisting of the valuable metals (1) to (3). Examples of the valuable metal (1) contained in the extraction liquid in the first solvent extraction step typically include zirconium. The valuable metals (1) to (3) become a cause of inhibiting recovery of lithium, manganese, cobalt, and nickel contained in the acid-dissolved solution.

The extraction residual liquid in the first solvent extraction step is then subjected to a second organic solvent extraction in STEP 3B. In the second organic solvent extraction, manganese, cobalt, and nickel, which are in the valuable metals except for lithium, are each separately extracted with an organic solvent, or iron is separated, and removed as a metal sulfate salt aqueous solution 2B. When the alkali is lithium hydroxide, a first lithium salt aqueous solution can be obtained. When the alkali is at least one selected from the group consisting of sodium hydroxide and potassium hydroxide, the first lithium salt aqueous solution and at least one salt of sodium and potassium are each separated by a method disclosed in Japanese Patent No. 7084669 from an alkali mixed salt aqueous solution obtained in the first solvent extraction step. The lithium salt contained in the first lithium salt aqueous solution is lithium chloride when hydrochloric acid is used in acid dissolution in STEP 1. The organic solvent is at least one selected from the group consisting of the phosphate ester, the phosphonate ester, the phosphinic acid, an organophosphorus compound such as a phosphine oxide, hydroxime, and an organic amine compound.

Examples of the phosphine oxide include tri-n-octylphosphine (TOPO). Examples of the hydroxime include 7-hydroxy-5,8-diethyl-6-dodecanone oxime (LIX-63), 5-dodecyl-2-hydroxybenzaldehyde oxime (LIX 860), 2-hydroxy-5-nonylbenzophenone oxime (LIX 65N), 2-hydroxy-5-nonylacetophenone oxime (SME 529), and 2-hydroxy-5-nonylphenyl benzyl ketone oxime (Acorga P-17). Examples of the organic amine compound include: Primene(R) JM-T, manufactured by The Dow Chemical Company, which is a primary amine; Amberlite(R) LA-2, manufactured by Sigma-Aldrich Co. LLC., which is a secondary amine; Alamine 336 (trioctylamine), manufactured by Sigma-Aldrich Co. LLC., which is a tertiary amine; and Aliquat(R) 336, manufactured by Sigma-Aldrich Co. LLC, which is a quaternary ammonium salt.

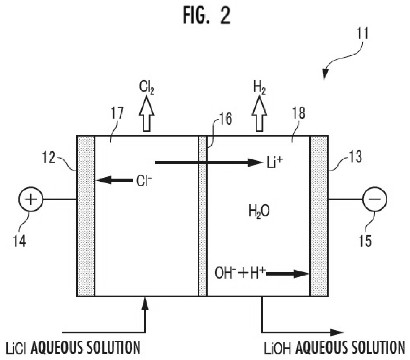

In the method for recovering valuable metals of the present invention, the first lithium salt aqueous solution is then subjected to membrane electrolysis by using an ionexchange membrane in STEP 4. The membrane electrolysis in STEP 4 can be carried out by using an electrolytic bath 11 illustrated in FIG. 2, for example.

The electrolytic bath 11 has an anode plate 12 on one inner surface, and has a cathode plate 13 on an inner surface opposite to the anode plate 12. The anode plate 12 is connected to an anode 14 of a power source, and the cathode plate 13 is connected to a cathode 15 of the power source. The electrolytic bath 11 is divided by an ion exchange membrane 16 into an anode chamber 17 having the anode plate 12 and a cathode chamber 18 having the cathode plate 13.

In the electrolytic bath 11, when lithium chloride, for example, is supplied as the second lithium salt aqueous solution to the anode chamber 17 to carry out electrolysis, chloride ions produce chlorine gas (Cl₂) on the anode plate 12, while lithium ions move through the ion exchange membrane 16 to the cathode chamber 18.

In the cathode chamber 18, water (H₂O) is ionized into hydroxide ions (OH⁻) and hydrogen ions (H⁺), and the hydrogen ions produce hydrogen gas (H₂) on the cathode plate 13, while the hydroxide ions are combined with lithium to produce a lithium hydroxide aqueous solution 3.

The electric power used in the membrane electrolysis step preferably includes electric power obtained by renewable energy, and more preferably includes electric power obtained by at least one selected from the group consisting of solar power generation, wind power generation, geothermal power generation, hydroelectric power generation, and biomass power generation.

By allowing the hydrogen gas (H₂) and the chlorine gas (Cl₂) produced by the membrane electrolysis to react with each other, hydrochloric acid as a mineral acid 4 can be obtained, and the mineral acid 4 can be used for dissolution of the active material powder 1 in STEP 1.

The lithium hydroxide aqueous solution 3 obtained by the membrane electrolysis can be recovered as lithium hydroxide monohydrate (LiOH·H₂O) by crystallization in STEP 5, or can be recovered as lithium carbonate (Li₂CO₃) by carbonation in STEP 6. The carbonation can be carried out by allowing the lithium hydroxide aqueous solution 3 to react with carbon dioxide gas (CO₂).

When the lithium hydroxide aqueous solution 3 is used for the solvent extraction in at least one selected from the group consisting of STEP 3A and STEP 3B, the lithium hydroxide aqueous solution 3 is added to an extraction solvent. Since the extraction solvent used for the solvent extraction in at least one selected from the group consisting of STEP 3A and STEP 3B is a cation exchange extractant, if it is used continuously, the liquid nature will lean toward the acidic side and the extraction rate will be decreased, but addition of the lithium hydroxide aqueous solution 3 can suppress the decrease in the extraction rate.

When the lithium hydroxide aqueous solution 3 is used for the solvent extraction in STEP 3B, the lithium hydroxide aqueous solution 3 can be used for the solvent extraction of at least one of manganese, cobalt, and nickel, each of which is separately solvent extracted.

In the membrane electrolysis, the first lithium salt aqueous solution is subjected to membrane electrolysis, resulting in production of a second lithium salt aqueous solution that is more dilute than the first lithium salt aqueous solution. Then, in the method for recovering valuable metals of the present invention, the second lithium salt aqueous solution may be concentrated in STEP 7 and added to the first lithium salt aqueous solution. The concentration in STEP 7 can be carried out by using, for example, a reverse osmosis membrane (RO membrane).

In the method for recovering valuable metals of the present invention, since lithium, manganese, cobalt, and nickel, and the valuable metals inhibiting recovery of these valuable metals can be separated, the recovery rate of lithium, manganese, cobalt, and nickel from the waste lithium ion battery can be improved. In the method for recovering valuable metals of the present invention, since an alkali source other than lithium is not supplied, the lithium salt aqueous solution with a high concentration can be obtained. In addition, since lithium hydroxide can be obtained by subjecting the lithium salt aqueous solution with a high concentration to membrane electrolysis in the method for recovering valuable metals of the present invention, the recovery rate of lithium can be improved. Furthermore, since there is no unnecessary alkali source other than lithium in the method for recovering valuable metals of the present invention, lithium hydroxide obtained by the membrane electrolysis can be returned to the steps as it is, thereby enabling resource circulation.

### Examples

Hereinafter, the present invention will be described in further detail based on Examples, but the present invention is not limited thereto.

In Examples and Comparative Example, contents of valuable metals in each dissolved solution were measured with an inductively coupled plasma optical emission spectrometer (ICP-OES) using Optima 8300, manufactured by PerkinElmer, Inc..

### [Example 1]

10 kg of positive electrode powder obtained from waste lithium ion batteries was dissolved in hydrochloric acid having a hydrochloric acid concentration adjusted to 9 to 10 mol/L to obtain 50 L of a dissolved solution having a cobalt concentration of 13 g/L, a manganese concentration of 13 g/L, a nickel concentration of 39 g/L, a zirconium concentration of 100 mg/L, a calcium concentration of 7 mg/L, a magnesium concentration of 3 mg/L, and a tungsten concentration of 0.1 mg/L. To the dissolved solution was added 1M di(2-ethylhexyl) phosphate (D2EHPA) in kerosene as an extractant, the equilibrium pH was adjusted to 3 with a 6 mol/L lithium hydroxide aqueous solution to separate lithium and the valuable metals in the dissolved solution. Table 1 shows an extraction rate of each of the valuable metals.

### [Examples 2 to 6]

Lithium and the valuable metals in the dissolved solution were separated in the same manner as in Example 1 by using 0.1M di(2-ethylhexyl) phosphate (D2EHPA) in kerosene (Example 2), 1M mono-2-ethylhexyl 2-ethylhexylphosphonate ester (PC-88A, manufactured by DAIHACHI CHEMICAL INDUSTRY CO., LTD.) in kerosene (Example 3), 0.1M mono-2-ethylhexyl 2-ethylhexylphosphonate ester in kerosene (Example 4), 1M phosphinic acid (CYANEX272, manufactured by Solvay S.A.) in decane (Example 5), or 0.1M phosphinic acid in decane (Example 6), as the extractant instead of the 1M di(2-ethylhexyl) phosphate (D2EHPA) in kerosene. Table 1 shows an extraction rate of each of the valuable metals.

### [Table 1]

**Table 1**

| | Example 1 | Example 2 | Example 3 | Example 4 | Example 5 | Example 6 |
|---|---|---|---|---|---|---|
| Extractant | 1M-D2EHPA | 0.1M-D2EHPA | 1M-PC-88A | 0.1M-PC-88A | 1M-Phosphinic acid | 0.1M-Phosphinic acid |
| Extraction rate of valuable metal (%) | | | | | | |
| Co | 56 | 2 | 88 | 12 | 94 | 35 |
| Ni | 12 | 1 | 17 | 1 | 50 | 1 |
| Mn | 99 | 50 | 99 | 20 | 92 | 60 |
| Mg | 58 | 12 | 61 | 16 | 98 | 50 |
| Ca | 96 | 84 | - | - | 75 | 40 |
| Zr | 100 | 100 | 100 | 100 | - | - |
| W | 100 | 100 | 100 | 100 | - | - |

It has been confirmed that calcium and zirconium can be extracted with di(2-ethylhexyl) phosphate (D2EHPA), zirconium can be extracted with mono-2-ethylhexyl 2-ethylhexylphosphonate ester, and magnesium can be extracted with phosphinic acid, from the dissolved solution containing the valuable metals.

### Reference Signs List

1 Active material powder
2A Extraction liquid
2BMetal sulfate salt aqueous solution
3 Lithium hydroxide aqueous solution
4 Mineral acid
11 Electrolytic bath
16 Ion exchange membrane

## Claims

1. A method for recovering valuable metals, comprising:
a first solvent extraction step of adding an organic solvent to a solution containing lithium and at least one valuable metal selected from a group consisting of transition metals except for manganese, cobalt, and nickel, alkaline earth metals, and aluminum to extract the valuable metal,
wherein the organic solvent comprises at least one selected from a group consisting of a compound represented by a following formula (1), phosphonate esters, phosphate esters, phosphinic acid, methyl isobutyl ketone, and trioctylamine, 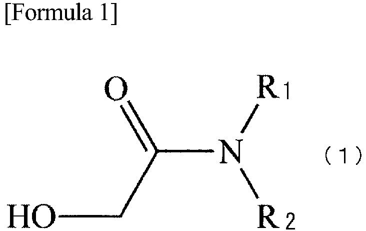
wherein in the formula (1), R₁ and R₂ each independently represent a hydrocarbon group having 6 to 20 carbon atoms.

2. The method for recovering valuable metals according to claim 1, further comprising:
a dissolution step of dissolving an active material powder obtained by pretreating a waste lithium ion battery into a mineral acid, thereby obtaining a dissolved solution;
a neutralization step of neutralizing the dissolved solution with an alkali;
a second solvent extraction step of separating, from a residual liquid in the first solvent extraction step, at least one selected from a group consisting of manganese, cobalt, and nickel by organic solvent extraction to obtain a first lithium salt aqueous solution as a residual liquid of the solvent extraction; and
a membrane electrolysis step of subjecting the first lithium salt aqueous solution to membrane electrolysis by using an ion exchange membrane to obtain a lithium hydroxide aqueous solution, an acid, and a second lithium salt aqueous solution that is more dilute than the first lithium salt aqueous solution, wherein
the lithium hydroxide aqueous solution obtained in the membrane electrolysis step is reused in at least one selected from a group consisting of the neutralization step, the first solvent extraction step, and the second solvent extraction step, and
the acid obtained in the membrane electrolysis step is reused as the mineral acid used in the dissolution step.

3. The method for recovering valuable metals according to claim 2, wherein the mineral acid comprises at least one selected from a group consisting of hydrochloric acid, sulfuric acid, and nitric acid.

4. The method for recovering valuable metals according to claim 3, wherein the mineral acid comprises hydrochloric acid.

5. The method for recovering valuable metals according to claim 2, wherein the alkali used in the neutralization step comprises lithium hydroxide.

6. The method for recovering valuable metals according to claim 1, wherein a concentration of at least one selected from a group consisting of the compound represented by the formula (1), the phosphonate ester, the phosphate ester, the phosphinic acid, the methyl isobutyl ketone, and the trioctylamine in the organic solvent is within a range of 0.001 M to 1.5 M.

7. The method for recovering valuable metals according to any one of claims 1 to 6, wherein electric power used in the membrane electrolysis step comprises electric power obtained by renewable energy.

8. The method for recovering valuable metals according to claim 7, wherein the electric power obtained by renewable energy comprises electric power obtained by at least one selected from a group consisting of solar power generation, wind power generation, geothermal power generation, hydroelectric power generation, and biomass power generation.
